# EUROPÄISCHE PATENTSCHRIFT

(11) **EP 3 524 862 B1**
(45) Veröffentlichungstag und Bekanntmachung des Hinweises auf die Patenterteilung: **06.12.2023**
(21) Anmeldenummer: 19151888.5
(22) Anmeldetag: 15.01.2019
(51) Int. Cl.: F16K 11/087

(54) **UMSCHALTVORRICHTUNG**
SWITCHING DEVICE
DISPOSITIF DE COMMUTATION

(30) Priorität: 31.01.2018 DE 102018000744
(43) Veröffentlichungstag der Anmeldung: 14.08.2019
(73) Patentinhaber: HYDAC Accessories GmbH, 66280 Sulzbach/Saar (DE)
(72) Erfinder: Michel, Bernd, 66578 Schiffweiler (DE); Junk, Astrid, 57600 Folkling (FR)
(74) Vertreter: Bartels und Partner, Patentanwälte

(56) Entgegenhaltungen:
- DE-A1-102014 208 358
- US-A- 3 450 157
- US-A- 4 821 692

## Beschreibung

Die Erfindung betrifft eine Umschaltvorrichtung mit den Merkmalen im Oberbegriff von Anspruch 1.

Solche Umschaltvorrichtungen sind in einer Vielzahl von Ausgestaltungen bekannt. So zeigt beispielhaft die DE 10 2015 007 598 A1 eine Umschaltvorrichtung auf in Form eines Kugelhahns mit einem in einem Ventilgehäuse drehbar geführten Steuerkörper, der in einer sperrenden Funktionsstellung mindestens zwei Anschlussstellen im Ventilgehäuse voneinander trennt, respektive sperrt, und in mindestens einer weiteren Funktionsstellung fluidführend miteinander verbindet. Bei der bekannten Lösung ist in vorteilhafter Weise vorgesehen, dass innerhalb des Steuerkörpers in Form einer schwenkbaren Ventilkugel, die fachsprachlich bei solchen Kugelhähnen auch mit "Küken" bezeichnet ist, eine Ventileinrichtung aufgenommen ist, insbesondere in Form eines Rückschlagventils, eines Stromregelventils, eines Druckbegrenzungs- oder Druckminderventils oder einer Druckwaage. Dergestalt eröffnet sich bei der bekannten Lösung die Möglichkeit, dass die Umschaltvorrichtung im angeschlossenen, hydraulischen Fluidsystem über die normale Funktion als schaltbares Sperrelement hinaus eine weitere Zusatzfunktion mittels der Ventileinrichtung übernehmen kann, bei der das Durchflussverhalten nicht nur in Abhängigkeit von der Funktionsstellung oder Drehposition des Steuer- oder Ventilkörpers modifiziert ist, sondern auch in Abhängigkeit von weiteren Fluidparametern, wie Durchstromrichtung oder Volumenstrom.

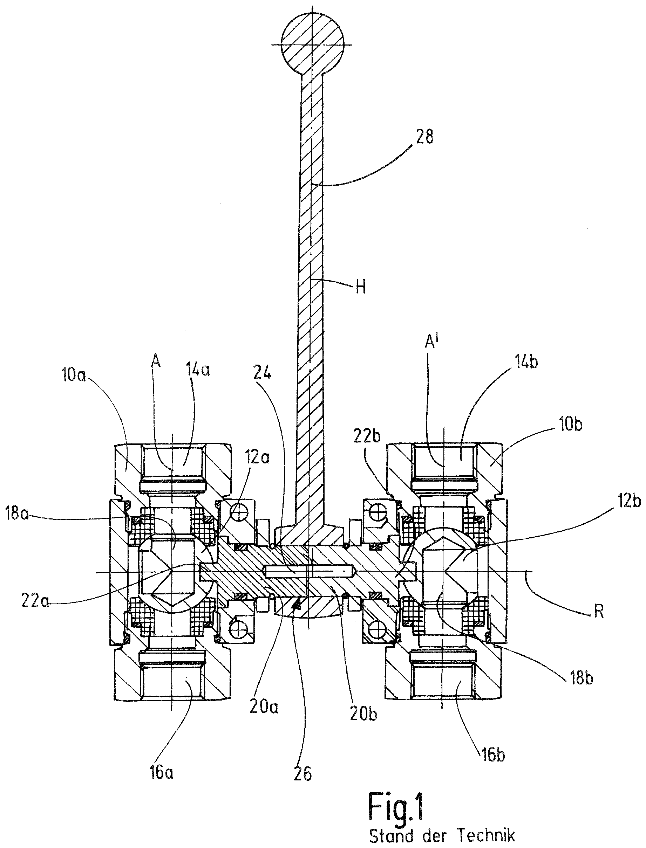

Für den Erhalt einer weiteren Zusatzfunktion sind im Stand der Technik Umschaltvorrichtungen (s. Fig. 1 zum Stand der Technik) bekannt geworden, mit zwei gemeinsam und zeitgleich betätigbaren Kugelhähnen, so dass mehr Fluidwege zwischen mehreren Anschlussstellen zweier beabstandeter Ventilgehäuse mit kugelförmigen Ventilkörpern ansteuerbar sind als mit nur einem Kugelhahn, wie vorstehend beschrieben. Zwischen den genannten Ventilgehäuseteilen der Kugelhähne befindet sich eine Betätigungseinrichtung in Form eines Handhebels, bei dessen Schwenkbetätigung beide Ventilkörper gleichsinnig verschwenkt werden, wobei die Anschlussstellen in den beiden Ventilgehäusen an eine zuordenbare Verrohrung eines Fluidsystems angeschlossen sind. Aufgrund der angesprochenen Verrohrung ist eine freie Zugänglichkeit des mittig angeordneten Betätigungshebels von außen erschwert. Auch kann es zu Verletzungen beim Bedienpersonal im Handbetrieb kommen, insbesondere wenn über die Verrohrung und die daran angeschlossene Umschaltvorrichtung heiße Fluide geführt werden, beispielsweise in Form von Hydraulikmedium unter üblichen Betriebstemperaturen, und die Bedienperson, um zu dem Handhebel für dessen Betätigung zu gelangen, zwischen die Verrohrung greifen muss.

Die US 3 450 157 beschreibt eine Umschaltvorrichtung mit den Merkmalen im Oberbegriff von Anspruch 1 mit mindestens zwei Ventilkörpern als zu betätigende Einrichtung, die jeweils mittels eines entlang einer Drehachse angeordneten Schwenkantriebes, der von einer Betätigungseinrichtung ansteuerbar ist, zwecks Sperren und Freigeben von Fluidwegen in mindestens einem Gehäuseteil bewegbar geführt sind, wobei zumindest die Ventilkörper mit ihrem jeweiligen Gehäuseteil in Hintereinanderanordnung als zu betätigende Einrichtung auf der einen Seite der Vorrichtung angeordnet sind, wobei die Betätigungseinrichtung auf der anderen Seite der Vorrichtung angeordnet ist, wobei sich die eine Seite an die jeweils andere Seite entlang der Drehachse des Schwenkantriebes anschließt, wobei in dem einen als Ventilkugel ausgebildeten Ventilkörper eine Bohrung zum Freigeben zugehöriger Fluidwege und zwei Schlitzaufnahmen zur Ansteuerung des Ventilkörpers ausgebildet sind, und wobei die Bohrung in radialer Richtung in den Ventilkörper eingebracht ist.

Weitere Umschaltvorrichtungen gehen aus der US 4 821 692 und der DE 10 2014 208 358 A1 hervor.

Die Erfindung stellt sich die Aufgabe, eine Umschaltvorrichtung der eingangs genannten Art dahingehend weiterzuentwickeln, dass die Zugänglichkeit der Betätigungseinrichtung erleichtert und zudem der Schutz der Bedienperson vor Verletzungen verbessert ist. Weiter soll die Umschaltvorrichtung einen kompakten Aufbau mit einem kleineren Einbauraum in der zugeordneten Verrohrung aufweisen.

Diese Aufgabe wird gelöst durch eine Umschaltvorrichtung mit den Merkmalen des Patentanspruchs 1 in seiner Gesamtheit. Vorteilhafte Ausgestaltungen der Erfindung sind Gegenstand der Unteransprüche.

Gemäß dem Kennzeichen von Anspruch 1 ist vorgesehen, dass die Schlitzaufnahmen kreuzförmig aufeinanderstehen; und dass sich die Bohrung über eine der Schlitzaufnahmen, die freigelassen von einem Steuersteg als Fluidführung dient, fortsetzt, um zwei Fluidanschlüsse über den zugehörigen Fluidraum miteinander zu verbinden, der als Ringraum ausgeführt ist.

Dadurch, dass zumindest die Ventilkörper mit ihrem jeweiligen Gehäuseteil in Hintereinanderanordnung als zu betätigende Einrichtung auf der einen Seite der Vorrichtung angeordnet sind, dass die Betätigungseinrichtung auf der anderen Seite der Vorrichtung angeordnet ist, und dass die eine Seite sich an die jeweils andere Seite entlang der Drehachse des Schwenkantriebes anschließt, ist erfindungsgemäß eine räumliche Trennung zwischen der Fluidsteuerfunktion auf der einen Seite der Umschaltvorrichtung und ihrer Betätigung auf der anderen Seite erreicht.

Hieraus ergibt sich der Vorteil, dass für eine Bedienperson die Anforderung entfällt, um oder zwischen Teile der Umschaltvorrichtung zu deren Bedienung greifen zu müssen, in welchen über die Umschaltvorrichtung geleitetes Fluid geführt ist. Verletzungen oder Beeinträchtigungen der Bedienperson durch Kontakt mit durch heißes Fluid erhitzte Teile der Umschaltvorrichtung sowie durch ein ungewolltes Anstoßen an Teilen der Umschaltvorrichtung bei deren Betätigung oder der angeschlossenen Verrohrung ist wirksam vermieden. Durch die Anordnung der Betätigungseinrichtung auf der anderen Seite der Vorrichtung ergibt sich der Vorteil einer hindernisfreien Zugänglichkeit.

Durch den Entfall einer zwischen den Ventilkörpern angeordneten Betätigungseinrichtung ist die eine Seite der Vorrichtung gegenüber bekannten Lösungen verkürzt ausgestaltet und kann in einen kleineren Einbauraum der Verrohrung eingebaut werden. Die andere Seite der Vorrichtung muss nicht zwingend in die Verrohrung eingebaut werden. Vorzugsweise ist die Betätigungseinrichtung, wie ein Betätigungshebel, in einem sich an die eine Seite der Vorrichtung samt zugehöriger Verrohrung anschließenden Raum frei zugänglich angeordnet.

Weiter eröffnet sich die Möglichkeit, einen elektrischen, hydraulischen oder pneumatischen Motorantrieb als Betätigungseinrichtung vorzusehen, wobei die Antriebsachse des Motors mit der Drehachse des Schwenkantriebes übereinstimmt. Hieraus ergibt sich der weitergehende Vorteil einer automatisierten Betätigung der Umschaltvorrichtung, so dass eine Betätigung durch eine Bedienperson komplett entfällt und etwaige Verletzungen ausgeschlossen sind.

Bei einer bevorzugten Ausführungsform der erfindungsgemäßen Umschaltvorrichtung weist der Schwenkantrieb eine mehrteilige Betätigungsspindel auf, greift jeweils ein Spindelteil zwischen zwei Ventilkörpern für deren gemeinsame Drehbewegung an diesen an, und greift ein weiteres Spindelteil entlang der Drehachse an einem zuäußerst an der einen Seite liegenden Ventilkörper an, das in die andere Seite vorsteht und dem Angriff der Betätigungseinrichtung dient. Das weitere Spindelteil bildet den Abschluss der nacheinander entlang der Drehachse angeordneten Ventilkörper und Spindelteile und bildet als ein Ende der Betätigungsspindel die Verbindung zur Betätigung auf der anderen Seite. Am weiteren Spindelteil greift die Betätigungseinrichtung an, vorzugsweise ist ein Betätigungshebel fest mit dem weiteren Spindelteil verbunden.

Bei einer weiteren bevorzugten Ausführungsform der erfindungsgemäßen Umschaltvorrichtung ist der jeweilige Ventilkörper in der Art einer Ventilkugel ausgebildet, die mindestens eine Schlitzaufnahme aufweist für den Eingriff eines Steuersteges des jeweils zuordenbaren Spindelteils der Betätigungsspindel. Vorzugsweise weist ein Spindelteil an jedem Ende einen Steuersteg auf, der jeweils in die Schlitzaufnahme einer Ventilkugel eingreift. Es ist jedoch auch vorstellbar, zwischen zwei aufeinanderfolgenden Ventilkörpern zwei oder mehr Spindelteile anzuordnen, wobei benachbarte Spindelteile vorzugsweise ebenfalls über einen in eine Schlitzaufnahme eingreifenden Steuersteg miteinander verbunden sind. Weiter sind in die jeweilige Ventilkugel Bohrungen zur Ausbildung der zugehörigen Fluidwege eingebracht. Bei einem Betätigen, respektive Verschwenken, der Betätigungsspindel werden die in die Betätigungsspindel eingebauten Ventilkugeln ebenfalls verschwenkt und je nach Lage der in die jeweilige Ventilkugel eingebrachten Bohrungen Fluidwege gesperrt oder getrennt. Die Fluidwege setzen sich an Fluidanschlüssen im Gehäuseteil, welches die jeweilige Ventilkugel aufnimmt, fort.

Weiter ist vorteilhaft, dass zumindest eine der Ventilkugeln, vorzugsweise die Ventilkugel, die auf der einen Seite zuäußerstliegend angeordnet und von dem weiteren Spindelteil betätigbar ist, eine weitere Schlitzaufnahme aufweist, die von dem Steuersteg des einen Spindelteils freigelassen als Fluidführung dient. Hieraus ergibt sich der Vorteil, dass eine entsprechende Bohrung in der Ventilkugel entfallen kann, da die weitere Schlitzaufnahme selbst die zugehörige Funktion übernimmt.

Bei einer bevorzugten Ausführungsform der erfindungsgemäßen Umschaltvorrichtung stehen die beiden Schlitzaufnahmen der jeweils einen Ventilkugel senkrecht aufeinander und sind diejenigen Schlitzaufnahmen, die dem Eingriff des jeweils zugeordneten Steuersteges der Spindelteile dienen, gleichgerichtet. Hieraus ergibt sich der Vorteil einer störungsfreien Betätigung der Betätigungsspindel mit den darin eingebauten Ventilkugeln. Durch die kreuzförmige Anordnung der Schlitzaufnahmen ist bei einer Rotation des Schwenkantriebes entlang der Drehachse ein guter Kraftübertrag zwischen den nacheinander angeordneten Spindelteilen und Ventilkugeln gewährleistet.

Bei einer weiteren bevorzugten Ausführungsform der erfindungsgemäßen Umschaltvorrichtung ist die jeweilige Ventilkugel in einer Ventilaufnahme im zugehörigen Gehäuseteil derart geführt, dass zwischen Ventilaufnahme und Ventilkugel ein Fluidraum gebildet ist, in den zumindest zwei von drei Fluidanschlüssen im jeweiligen Gehäuseteil einmünden, von denen wiederum zwei Fluidanschlüsse eine gemeinsame Achse haben und der dritte Fluidanschluss mit seiner Achse senkrecht auf dieser gemeinsamen Achse steht. Auf diese Weise ist eine Umschaltvorrichtung in der Art eines 3-Wege-Kugelhahns gebildet. In die Ventilkugel sind zwei in der Mitte der Kugel senkrecht aufeinandertreffende Bohrungen eingebracht. Der Ventilkörper hat zwei Schaltstellungen, in welchen jeweils einer der Fluidanschlüsse mit der gemeinsamen Achse mit dem dritten Fluidanschluss verbunden wird. Zum Verschwenken des Schwenkantriebes um 90° wird der Ventilkörper zwischen beiden Schaltstellungen geschaltet, respektive die Betätigungsspindel verschwenkt.

Weiter ist vorteilhaft, dass die Ventilkugeln, die paarweise von dem einen Spindelteil betätigbar sind, gleichzeitig und gemeinsam jeweils einen in derselben Richtung liegenden Fluidanschluss oder jeweils einen in dieser Richtung liegenden und einen hierzu entgegengesetzt liegenden Fluidanschluss sperren. Hierbei steuern die Ventilkugeln baugleich im jeweiligen Gehäuseteil ausgebildete Fluidanschlüsse an. Je nach Anforderung im angeschlossenen, hydraulischen Fluidsystem werden in einer ersten Schaltstellung die in derselben Richtung liegenden Fluidanschlüsse gesperrt und in einer zweiten Schaltstellung geöffnet oder in einer ersten Schaltstellung ein in einer Richtung liegender Fluidanschluss geöffnet und ein in einer hierzu entgegengesetzten Richtung liegender anderer Fluidanschluss gesperrt und in der zweiten Schaltstellung der eine Fluidanschluss gesperrt und der andere Fluidanschluss geöffnet.

Besonders bevorzugt steht der dritte Fluidanschluss senkrecht auf der Drehachse der Betätigungsspindel mit ihren Spindelteilen. Hieraus ergibt sich der Vorteil eines besonders einfachen Aufbaus des jeweiligen Ventilkörpers sowie des zugehörigen Gehäuseteils, da senkrecht aufeinanderstehende Bohrungen im jeweiligen Ventilkörper und Betätigungsbewegungen um vorzugsweise 90° des Schwenkantriebes einen einfachen Aufbau und eine einfache Betätigung der Umschaltvorrichtung gewährleisten.

Bei einer weiteren bevorzugten Ausführungsform der erfindungsgemäßen Umschaltvorrichtung weist ein Gehäuseteil die Spindelteile der Betätigungsspindel auf, in das auf gegenüberliegenden Seiten paarweise weitere Gehäuseteile eingeschraubt sind, die die beiden in der gemeinsamen Achse liegenden Fluidanschlüsse aufweisen und die zwischen sich in Lagerteilen geführt die jeweils zuordenbaren Ventilkugeln aufnehmen. Die rotationssymmetrisch zur Drehachse ausgebildeten, zylinderförmigen Spindelteile sind vorzugsweise in koaxial zur Drehachse des Schwenkantriebes ausgebildeten Durchgangsbohrungen des jeweiligen Gehäuseteils drehbar gelagert. Durch die Aneinanderanordnung von jeweils einem Gehäuseteil mit einem oder mehreren Spindelteilen und einem weiteren Gehäuseteil mit einer Ventilkugel ergibt sich im Zusammenbau ein Gehäuse, welches den Schwenkantrieb sowie die Ventilkörper als zu betätigende Einrichtung aufnimmt. Vorteilhafterweise sind die Gehäuseteile und die weiteren Gehäuseteile jeweils baugleich ausgebildet. In diesem Fall ist an dem der Betätigungseinrichtung gegenüberliegenden Ende des Gehäuses anstelle eines Gehäuseteils eine Abschlussplatte in das Gehäuseteil eingeschraubt. Alternativ zu einem aus einzelnen Gehäuseteilen zusammengesetzten Gehäuse können der Schwenkantrieb sowie die Ventilkörper in ein einstückiges Gehäuse mit bedarfsgerecht darin ausgebildeten Bohrungen eingesetzt sein.

Weiter ist vorteilhaft, dass das eine Gehäuseteil mindestens ein an beiden Ventilkörpern angreifendes Spindelteil aufnimmt, und dass das mindestens eine Spindelteil mit einer Sicherung axial unverschiebbar in diesem Gehäuseteil gelagert ist. Durch die axiale Lagesicherung des Spindelteils werden störende Wechselwirkungen zwischen den beiden über das Spindelteil miteinander verbundenen Ventilkörpern wirksam vermieden. Etwaige Stöße, insbesondere beim Verschwenken der Ventilkörper über den Schwenkantrieb, werden durch das axial gesicherte Spindelteil nicht an den anderen Ventilkörper weitergegeben.

Bei einer bevorzugten Ausführungsform der erfindungsgemäßen Umschaltvorrichtung ermöglicht die Betätigungseinrichtung mittels eines Hebels von Hand oder motorbetrieben betätigbar ein Verschwenken aller Spindelteile der Betätigungsspindel zwischen zwei Endstellungen um mindestens 180°. Hieraus ergibt sich der Vorteil einer bedarfsgerechten Ansteuerung der Umschaltvorrichtung zwischen mindestens zwei Schaltstellungen. Auf diese Weise können als 3-Wege-Kugelhahn oder andersartig ausgebildete Ventilkörper in einfacher und zuverlässiger Weise angesteuert werden.

Bei einer weiteren bevorzugten Ausführungsform der erfindungsgemäßen Umschaltvorrichtung ist mindestens ein Näherungs- oder Endschalter zur Überwachung der Position der Betätigungsspindel an einem vorstehenden Teil des weiteren Spindelteils mit der Betätigungseinrichtung vorgesehen. Hieraus ergibt sich der Vorteil, dass die Schaltstellung des Schwenkantriebes und der darin eingebauten Ventilkörper überwacht und das zugehörige Sperren und Freigeben von Fluidwegen kontrolliert werden können. Weitere Vorteile und Merkmale der Erfindung ergeben sich aus den Figuren und der nachfolgenden Beschreibung der Zeichnung.

Die in den Figuren gezeigten Merkmale sind rein schematisch und nicht maßstäblich zu verstehen. Es zeigen:
- Fig. 1: einen Schnitt durch eine aus dem Stand der Technik bekannte Umschaltvorrichtung;
- Fig. 2: einen Schnitt durch ein erstes Ausführungsbeispiel der erfindungsgemäßen Umschaltvorrichtung mit zwei Ventilkörpern als zu betätigende Einrichtung;
- Fig. 3a: eine perspektivische Ansicht eines zweiten Ausführungsbeispiels der erfindungsgemäßen Umschaltvorrichtung;
- Fig. 3b: einen Schnitt durch die in Fig. 3a gezeigte Umschaltvorrichtung;
- Fig. 4a bis 4c: eine perspektivische Ansicht auf und zwei Schnitte durch als Ventilkugeln ausgebildete Ventilkörper zum Einbau in erfindungsgemäß ausgestaltete Umschaltvorrichtungen; und
- Fig. 5: einen Schnitt durch einen Teilbereich einer erfindungsgemäßen Umschaltvorrichtung zur Veranschaulichung der Einbaulage der Ventilkugel aus den Fig. 4a und 4b.

Fig. 1 zeigt einen Schnitt durch eine aus dem Stand der Technik bekannte Umschaltvorrichtung mit zwei Gehäuseteilen 10a, 10b, in welchen jeweils ein als Ventilkugel ausgebildeter Ventilkörper 12a, 12b drehbar gelagert ist. Die Gehäuseteile 10a, 10b weisen jeweils drei Fluidanschlüsse auf, von denen im Schnittbild der Fig. 1 jeweils ein erster Fluidanschluss 14a, 14b und ein zweiter Fluidanschluss 16a, 16b gezeigt sind. Die als Bohrungen im jeweiligen Gehäuseteil 10a, 10b ausgebildeten ersten und zweiten Fluidanschlüsse 14a, 14b, 16a, 16b haben jeweils eine in der Darstellung der Fig. 1 vertikal verlaufende, gemeinsame Achse A, A'. In die Ventilkörper 12a, 12b sind jeweils Bohrungen 18a, 18b eingebracht, über welche die Fluidwege zwischen den ersten und zweiten Fluidanschlüssen 14a, 14b, 16a, 16b und einem in der Fig. 1 nicht dargestellten, senkrecht zur gemeinsamen Achse A, A' stehenden dritten Fluidanschluss sperr- und freigebbar sind. Die in den Gehäuseteilen 10a, 10b angeordneten Ventilkörper 12a, 12b bilden insoweit jeweils einen 3-Wege-Kugelhahn.

In der in Fig. 1 gezeigten Schaltstellung der beiden Ventilkörper 12a, 12b sind in dem in der Fig. 1 links dargestellten Gehäuseteil 10a der erste Fluidanschluss 14a mit dem dritten Fluidanschluss verbunden und in dem in Fig. 1 rechts dargestellten Gehäuseteil 10b der zweite Fluidanschluss 16b mit dem dritten Fluidanschluss verbunden. Die Betätigung der beiden Ventilkörper 12a, 12b erfolgt über zwei entlang einer Drehachse R drehbar, zwischen den beiden Gehäuseteilen 10a, 10b angeordnete Spindelteile 20a, 20b. Die Spindelteile 20a, 20b greifen jeweils mit einem Steuersteg 22a, 22b in den zugehörigen Ventilkörper 12a, 12b ein und sind über ein koaxial zur Drehachse R angeordnetes, stiftförmiges Befestigungsteil 24 fest miteinander verbunden. Die Spindelteile 20a, 20b bilden eine Betätigungsspindel 26 und stellen insoweit einen Schwenkantrieb für die beiden Ventilkörper 12a, 12b als zu betätigende Einrichtung dar.

An der Betätigungsspindel 26 ist mittig eine als Betätigungshebel ausgebildete Betätigungseinrichtung 28 angeordnet, über welche die Spindelteile 20a, 20b und die daran angeschlossenen Ventilkörper 12a, 12b um die Drehachse R verschwenkt werden können. Bei einer Schwenkbewegung der Betätigungseinrichtung 28 um 90° machen die Ventilkörper 12a, 12b eine gemeinsame Drehbewegung und werden jeweils in die andere, in Fig. 1 nicht gezeigte Schaltstellung gedreht. In der anderen Schaltstellung sind im in Fig. 1 links dargestellten Gehäuseteil 10a der zweite Fluidanschluss 16a mit dem dritten Fluidanschluss verbunden und in dem in Fig. 1 rechts dargestellten Gehäuseteil 10b der erste Fluidanschluss 14b mit dem dritten Fluidanschluss. Es ist jedoch auch vorstellbar, die beiden Ventilkörper 12a, 12b gleichgerichtet an den Spindelteilen 20a, 20b anzuordnen, so dass in der einen Schaltstellung die ersten Fluidanschlüsse 14a, 14b jeweils mit dem dritten Fluidanschluss und in der anderen Schaltstellung die zweiten Fluidanschlüsse 16a, 16b jeweils mit dem dritten Fluidanschluss verbunden sind.

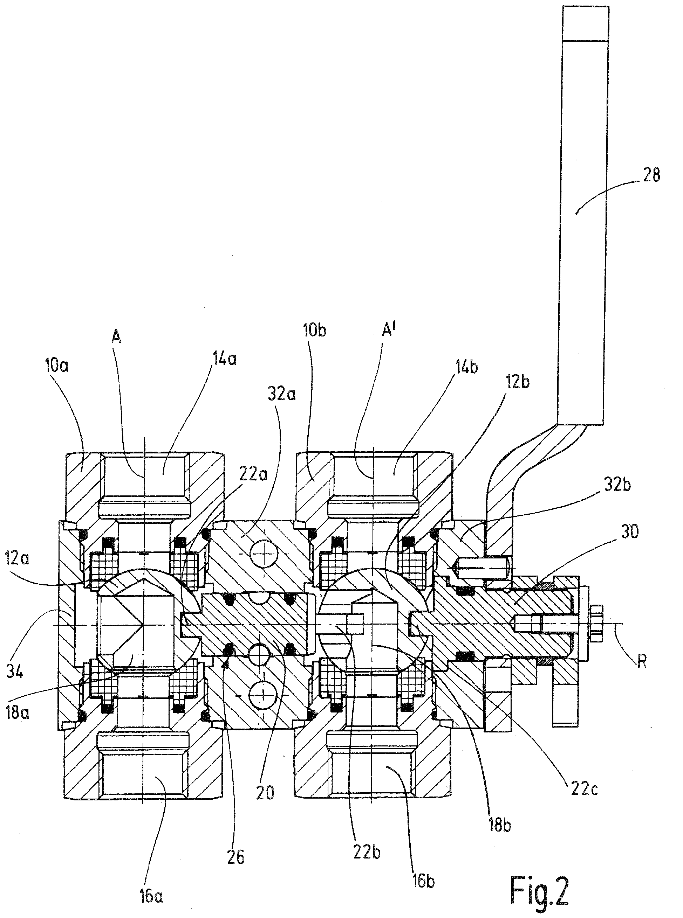

Fig. 2 zeigt einen Schnitt durch eine erfindungsgemäß ausgestaltete Umschaltvorrichtung, welche sich von einer aus dem Stand der Technik bekannten, beispielhaft in Fig. 1 gezeigten Umschaltvorrichtung dadurch unterscheidet, dass ein Spindelteil 20 zwischen den Gehäuseteilen 10a, 10b angeordnet ist und mit Steuerstegen 22a, 22b an beiden Ventilkörpern 12a, 12b angreift. An einem an den in Fig. 2 rechts dargestellten Ventilkörper 12b angreifenden weiteren Spindelteil 30 ist die als Betätigungshebel ausgebildete Betätigungseinrichtung 28 angeordnet. Die Spindelteile 20, 30 sind jeweils in einem weiteren Gehäuseteil 32a, 32b drehbar gelagert. Die nacheinander angeordneten Gehäuseteile 10a, 10b, 32a, 32b sind miteinander verschraubt und bilden insoweit ein Ventilgehäuse, welches die Ventilkörper 12a, 12b vollständig und die Betätigungsspindel 26 zumindest teilweise umgibt. Am der Betätigungseinrichtung 28 gegenüberliegenden Ende des Ventilgehäuses ist eine Abschlussplatte 34 mit dem in Fig. 2 links dargestellten Gehäuseteil 10a verschraubt.

Bei der erfindungsgemäß ausgestalteten Umschaltvorrichtung sind die in den hintereinander angeordneten Gehäuseteilen 10a, 10b drehbar gelagerten Ventilkörper 12a, 12b als zu betätigende Einrichtung auf der einen Seite, in Fig. 2 links angeordnet und die Betätigungseinrichtung 28 auf der anderen Seite, in Fig. 2 rechts angeordnet, wobei sich die eine Seite an die andere Seite anschließt. Anstelle des Handhebels kann als Betätigungseinrichtung 28 ein Motor vorgesehen sein, dessen Antriebsachse mit der Drehachse R der Betätigungsspindel 26 fluchtet. Es versteht sich, dass mehr als zwei Ventilkörper 12a, 12b an der Umschaltvorrichtung vorgesehen und über die Betätigungsspindel 26 zwischen einzelnen Schaltstellungen verschwenkbar sein können.

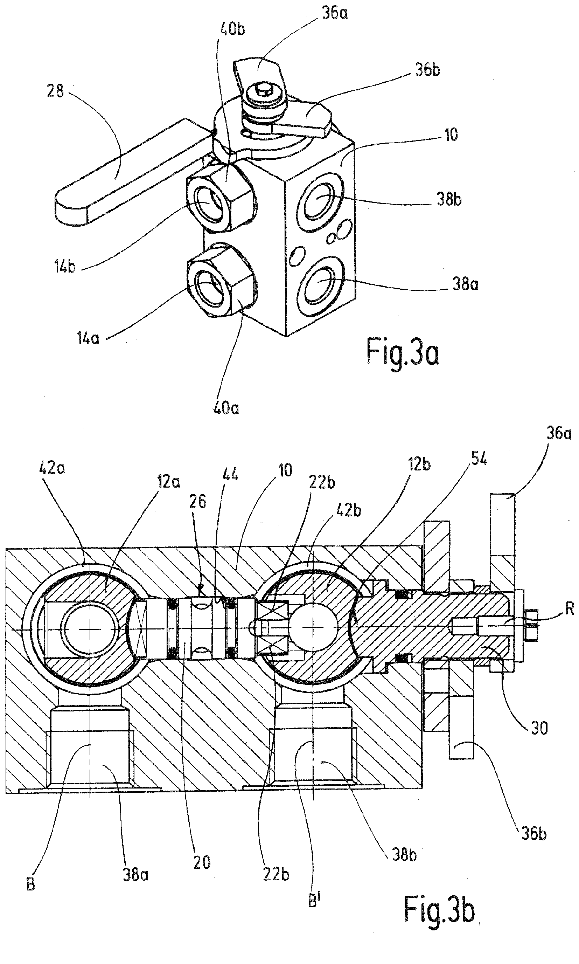

Bei dem in Fig. 3a in perspektivischer Darstellung und in Fig. 3b im Schnitt dargestellten zweiten Ausführungsbeispiel der erfindungsgemäßen Umschaltvorrichtung sind die Ventilkörper 12a, 12b (vgl. Fig. 3b) in einem gemeinsamen, blockartigen Gehäuseteil 10 angeordnet, welches insoweit ein einteiliges Ventilgehäuse bildet. Neben der Betätigungseinrichtung 28 sind am weiteren Spindelteil 30 Teile 36a, 36b eines Näherungsschalters angeordnet. Über den Näherungsschalter ist die Stellung der über die Betätigungseinrichtung 28 schwenkbaren Betätigungsspindel 26 und somit die Schaltstellung der Ventilkugeln 12a, 12b überwachbar. Die Teile 36a, 36b des Näherungsschalters stehen flügelartig vom weiteren Spindelteil 30 ab, wobei jeweils ein Teil 36a, 36b einer Schaltstellung der Betätigungsspindel 26 zugeordnet ist. Die Betätigungseinrichtung 28 ermöglicht in dem in den Fig. 3a und 3b gezeigten zweiten Ausführungsbeispiel der Umschaltvorrichtung ein Verschwenken aller Spindelteile 20, 30 der Betätigungsspindel 26 samt daran angeordneter Teile 36a, 36b des Näherungsschalters um 180°. Über die Ventilkörper 12a, 12b sind Fluidwege zwischen ersten Fluidanschlüssen 14a, 14b, zweiten Fluidanschlüssen (in Fig. 3a und 3b nicht sichtbar) und dritten Fluidanschlüssen 38a, 38b sperr- und freigebbar. Erster und zweiter Fluidanschluss 14a, 16a haben jeweils eine gemeinsame Achse, der dritte Fluidanschluss 38a, 38b steht mit seiner in der Darstellung der Fig. 3b vertikal angeordneten, weiteren Achse B, B' jeweils senkrecht auf der gemeinsamen Achse (in Fig. 3a und 3b nicht gezeigt) von erstem und zweitem Fluidanschluss 14a, 14b.

Die Fluidanschlüsse 14a, 14b, 38a, 38b sind jeweils als Bohrung im Gehäuseteil 10 ausgebildet. Der perspektivischen Darstellung der Fig. 3a ist entnehmbar, dass an erstem und zweitem Fluidanschluss 14a, 16a jeweils ein an der Außenseite des Gehäuseteils 10 angeordnetes Anschlussstück 40a, 40b für eine Rohrleitung vorgesehen ist. Die Schnittdarstellung der Fig. 3b zeigt, dass im Gehäuseteil 10 weiter den jeweiligen Ventilkörper 12a, 12b umgebende Ringräume 42a, 42b ausgebildet sind, in welche jeweils der dritte Fluidanschluss 38a, 38b und die weiteren Fluidanschlüsse münden. Die Spindelteile 20, 30 greifen formschlüssig in die beiden Ventilkörper 12a, 12b ein. Das zwischen den beiden Ventilkörpern 12a, 12b angeordnete und an diesen angreifende Spindelteil 20 ist in einer zugeordneten Axialbohrung 44, welche koaxial zur Drehachse R der Betätigungsspindel 26 verläuft, mittels einer Sicherung gegen Verschiebungen in axialer Richtung geschützt, wodurch störende Wechselwirkungen zwischen den beiden Ventilkörpern 12a, 12b bei einem Verschwenken der Betätigungsspindel 26 unterbunden sind.

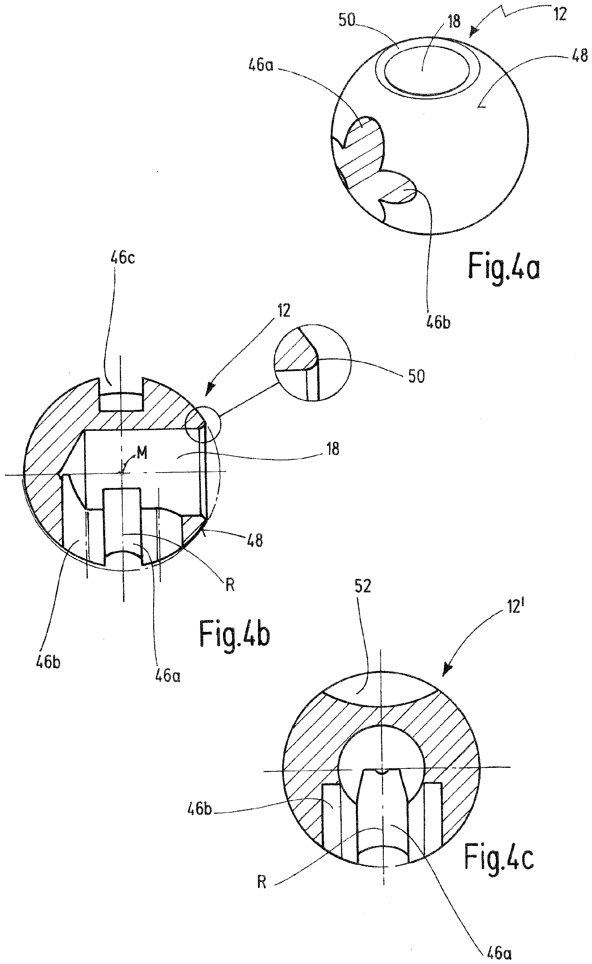

Fig. 4a zeigt in perspektivischer Darstellung einen als Ventilkugel ausgebildeten Ventilkörper 12, in welchen eine Bohrung 18 zum Freigeben zugehöriger Fluidwege beim Einsatz des Ventilkörpers 12 und zwei Schlitzaufnahmen 46a, 46b zur Ansteuerung des Ventilkörpers 12 ausgebildet sind. Die Bohrung 18 ist in radialer Richtung in den Ventilkörper 12 eingebracht. Die Schlitzaufnahmen 46a, 46b stehen kreuzförmig aufeinander und sind an ihren Enden jeweils gerundet ausgebildet. Eine erste Schlitzaufnahme 46a ist in der in Fig. 4a gewählten Darstellung vertikal, parallel zur Ausrichtung der Bohrung 18 verlaufend angeordnet, die zweite Schlitzaufnahme 46b horizontal verlaufend.

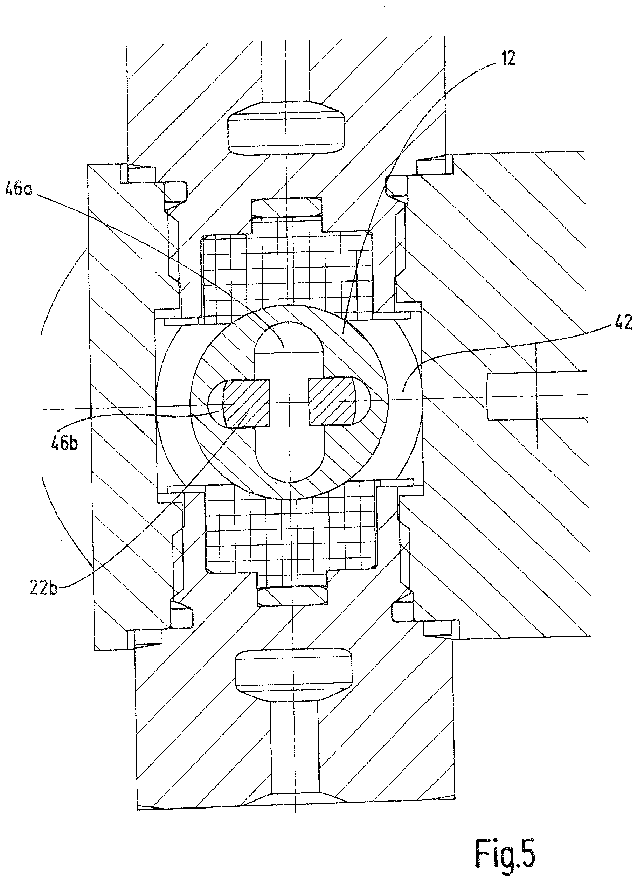

Fig. 4b zeigt einen Schnitt durch den Ventilkörper 12 aus Fig. 4a, wobei der Mittelpunkt M des als Ventilkugel ausgebildeten Ventilkörpers 12 in der Schnittebene liegt. Die in den Ventilkörper 12 eingebrachte Bohrung 18 erstreckt sich von einer Außenseite 48 des kugelförmigen Ventilkörpers 12 aus über den Mittelpunkt M hinaus ins Innere des Ventilkörpers 12 und kreuzt die Schlitzaufnahmen 46a, 46b. Auch wenn die Fig. 4b nicht die Einbaulage des Ventilkörpers 12 zeigt, ist zum besseren Verständnis die Drehachse R entsprechend einer späteren Einbaulage des Ventilkörpers 12 eingezeichnet. Den Schlitzaufnahmen 46a, 46b gegenüberliegend ist eine weitere Schlitzaufnahme 46c im Ventilkörper 12 ausgebildet, wobei die Schlitzaufnahme 46c senkrecht zur Drehachse R steht. Die dritte Schlitzaufnahme 46c weist keine räumliche Verbindung zur Bohrung 18 auf. Die Bohrung 18 setzt sich über eine der Schlitzaufnahmen 46a, 46b, die freigelassen von einem Steuersteg als Fluidführung dient, fort, um beim Einsatz des Ventilkörpers 12 zwei Fluidanschlüsse über den zugehörigen Ringraum 42, 42a, 42b (vgl. Fig. 3b und 5) miteinander zu verbinden. Ein in Fig. 4b vergrößert dargestellter Teilbereich verdeutlicht, dass ein die Bohrung 18 an der Außenseite 48 umgebender Rand 50 im Querschnitt gerundet ausgebildet ist, wodurch Abnutzungen und Beschädigungen beim Verschwenken des drehbar gelagerten Ventilkörpers 12 in der Umschaltvorrichtung vermeidbar sind.

Der in den Fig. 4a und 4b gezeigte Ventilkörper 12 findet vorzugsweise in dem in Fig. 2 gezeigten ersten Ausführungsbeispiel der Umschaltvorrichtung Einsatz. Hierbei sind die Eingriffe der Steuerstege 22a, 22b, 22c der Spindelteile 20, 30 derart gewählt, dass die am in Fig. 2 rechts dargestellten Ventilkörper 12b eingreifenden Steuerstege 22b, 22c des Spindelteils 20 und des weiteren Spindelteils 30 gleichgerichtet sind und der in den in Fig. 2 links dargestellten Ventilkörper 12a eingreifende Steuersteg 22a des Spindelteils 20 gegenüber diesen Steuerstegen 22b, 22c bzw. der zugehörigen Schlitzaufnahmen senkrecht ausgerichtet ist.

Fig. 4c zeigt einen Schnitt durch einen als Ventilkugel ausgebildeten Ventilkörper 12', welcher vorzugsweise in dem in den Fig. 3a und 3b gezeigten zweiten Ausführungsbeispiel der Umschaltvorrichtung Einsatz findet. In den Ventilkörper 12' ist eine rotationssymmetrisch zur Drehachse R ausgebildete, konvexe Ausnehmung 52 eingebracht, in welche ein gegenstückartig ausgebildetes Steuerteil 54 des weiteren Spindelteils 30 (vgl. Fig. 3b) mit einem konkaven Endteil in Einbaulage eingreift. Der Ausnehmung 52 gegenüberliegend sind Schlitzaufnahmen 46a, 46b zur Aufnahme zugehöriger, paarweise parallel zueinander angeordneter Steuerstege 22b des Spindelteils 20 am Ventilkörper 12' ausgebildet.

Fig. 5 veranschaulicht in einer vergrößerten Schnittdarstellung eines Teilbereichs einer erfindungsgemäßen Umschaltvorrichtung die Einbaulage der Ventilkugel 12 aus den Fig. 4a und 4b mit den darin ausgebildeten Schlitzaufnahmen 46a, 46b, über welche ein nicht näher gezeigtes Spindelteil am Ventilkörper 12 angreift. In die eine Schlitzaufnahme 46b greift ein Steuersteg 22b ein. In den den Ventilkörper 12 umgebenden Ringraum 42 münden zumindest zwei vom Ventilkörper 12 angesteuerte Fluidanschlüsse. Die von einem Steuersteg freigelassene Schlitzaufnahme 46a dient als Fluidführung, so dass eine zugehörige Teilbohrung im Ventilkörper 12 entfallen kann.

## Patentansprüche

1. Umschaltvorrichtung mit mindestens zwei Ventilkörpern (12a, 12b, 12, 12') als zu betätigende Einrichtung, die jeweils mittels eines entlang einer Drehachse (R) angeordneten Schwenkantriebes (26), der von einer Betätigungseinrichtung (28) ansteuerbar ist, zwecks Sperren und Freigeben von Fluidwegen in mindestens einem Gehäuseteil (10, 10a, 10b) bewegbar geführt sind, wobei zumindest die Ventilkörper (12a, 12b, 12, 12') mit ihrem jeweiligen Gehäuseteil (10, 10a, 10b) in Hintereinanderanordnung als zu betätigende Einrichtung auf der einen Seite der Vorrichtung angeordnet sind, wobei die Betätigungseinrichtung (28) auf der anderen Seite der Vorrichtung angeordnet ist, wobei sich die eine Seite an die jeweils andere Seite entlang der Drehachse (R) des Schwenkantriebes (26) anschließt,
wobei in dem einen als Ventilkugel ausgebildeten Ventilkörper (12) eine Bohrung (18) zum Freigeben zugehöriger Fluidwege und zwei Schlitzaufnahmen (46a, 46b) zur Ansteuerung des Ventilkörpers (12) ausgebildet sind, und
wobei die Bohrung (18) in radialer Richtung in den Ventilkörper (12) eingebracht ist,
**dadurch gekennzeichnet,**
**dass** die Schlitzaufnahmen (46a, 46b) kreuzförmig aufeinanderstehen; und
**dass** sich die Bohrung (18a bzw. 18b) über eine der Schlitzaufnahmen (46a, 46b), die freigelassen von einem Steuersteg als Fluidführung dient, fortsetzt, um zwei Fluidanschlüsse über den zugehörigen Fluidraum (42, 42a, 42b) miteinander zu verbinden, der als Ringraum ausgeführt ist.

2. Umschaltvorrichtung nach Anspruch 1, **dadurch gekennzeichnet, dass** der Schwenkantrieb eine mehrteilige Betätigungsspindel (26) aufweist, dass jeweils ein Spindelteil (20, 20a, 20b) zwischen zwei Ventilkörpern (12a, 12b, 12, 12') für deren gemeinsame Drehbewegung an diesen angreift, und dass ein weiteres Spindelteil (30) entlang der Drehachse (R) an einem zuäußerst an der einen Seite liegenden Ventilkörper (12b) angreift, das in die andere Seite vorsteht und dem Angriff der Betätigungseinrichtung (28) dient.

3. Umschaltvorrichtung nach Anspruch 1 oder 2, **dadurch gekennzeichnet, dass** der jeweilige Ventilkörper (12a, 12b, 12, 12') in der Art einer Ventilkugel ausgebildet ist, die mindestens eine Schlitzaufnahme (46a, 46b, 46c) aufweist für den Eingriff eines Steuersteges (22a, 22b, 22c) des jeweils zuordenbaren Spindelteils (20, 20a, 20b, 30) der Betätigungsspindel (26).

4. Umschaltvorrichtung nach einem der vorstehenden Ansprüche, **dadurch gekennzeichnet, dass** zumindest eine der Ventilkugeln (12a, 12b, 12, 12'), vorzugsweise die Ventilkugel, die auf der einen Seite zuäußerstliegend angeordnet und von dem weiteren Spindelteil (30) betätigbar ist, eine weitere Schlitzaufnahme (46a) aufweist, die von dem Steuersteg des einen Spindelteils (20, 20a, 20b) freigelassen als Fluidführung dient.

5. Umschaltvorrichtung nach einem der vorstehenden Ansprüche, **dadurch gekennzeichnet, dass** die beiden Schlitzaufnahmen (46a, 46b, 46c) der jeweils einen Ventilkugel (12a, 12b, 12, 12') senkrecht aufeinander stehen, und dass diejenigen Schlitzaufnahmen (46a, 46b, 46c), die dem Eingriff des jeweils zugeordneten Steuersteges (22a, 22b, 22c) der Spindelteile (20, 20a, 20b, 30) dienen, gleichgerichtet sind.

6. Umschaltvorrichtung nach einem der vorstehenden Ansprüche, **dadurch gekennzeichnet, dass** die jeweilige Ventilkugel (12a, 12b, 12, 12') in einer Ventilaufnahme im zugehörigen Gehäuseteil (10, 10a, 10b) derart geführt ist, dass zwischen Ventilaufnahme und Ventilkugel (12a, 12b, 12, 12') ein Fluidraum (42, 42a, 42b) gebildet ist, in den zumindest zwei von drei Fluidanschlüssen (14a, 14b, 16a, 16b, 38a, 38b) im jeweiligen Gehäuseteil (10, 10a, 10b) einmünden, von denen wiederum zwei Fluidanschlüsse (14a, 14b, 16a, 16b) eine gemeinsame Achse (A, A') haben und der dritte Fluidanschluss (38a, 38b) mit seiner Achse (B, B') senkrecht auf dieser gemeinsamen Achse (A, A') steht.

7. Umschaltvorrichtung nach einem der vorstehenden Ansprüche, **dadurch gekennzeichnet, dass** die Ventilkugeln (12a, 12b, 12, 12'), die paarweise von dem einen Spindelteil (20, 20a, 20b) betätigbar sind, gleichzeitig und gemeinsam jeweils einen in derselben Richtung liegenden Fluidanschluss (14a, 14b, 16a, 16b) oder jeweils einen in dieser Richtung liegenden und einen hierzu entgegengesetzt liegenden Fluidanschluss (14a,14b, 16a,16b) sperren.

8. Umschaltvorrichtung nach einem der vorstehenden Ansprüche, **dadurch gekennzeichnet, dass** der dritte Fluidanschluss (38a, 38b) senkrecht auf der Drehachse (R) der Betätigungsspindel (26) mit ihren Spindelteilen (20, 20a, 20b, 30) steht.

9. Umschaltvorrichtung nach einem der vorstehenden Ansprüche, **dadurch gekennzeichnet, dass** ein Gehäuseteil (32a, 32b) die Spindelteile (20, 20a, 20b, 30) der Betätigungsspindel (26) aufweist, in das auf gegenüberliegenden Seiten paarweise weitere Gehäuseteile (10, 10a, 10b) eingeschraubt sind, die die beiden in der gemeinsamen Achse (A, A') liegenden Fluidanschlüsse (14a, 14b, 16a, 16b) aufweisen und die zwischen sich in Lagerschalen geführt die jeweils zuordenbaren Ventilkugeln (12a, 12b, 12, 12') aufnehmen.

10. Umschaltvorrichtung nach einem der vorstehenden Ansprüche, **dadurch gekennzeichnet, dass** das eine Gehäuseteil (10, 10a, 10b) mindestens ein an beiden Ventilkörpern (12a, 12b, 12, 12') angreifendes Spindelteil (20, 20a, 20b, 30) aufnimmt, und dass das mindestens eine Spindelteil (20, 20a, 20b, 30) mittels einer Sicherung axial unverschiebbar in diesem Gehäuseteil (10, 10a, 10b) gelagert ist.

11. Umschaltvorrichtung nach einem der vorstehenden Ansprüche, **dadurch gekennzeichnet, dass** die Betätigungseinrichtung (28) mittels eines Hebels von Hand oder motorgetrieben betätigbar ein Verschwenken aller Spindelteile (20, 20a, 20b, 30) der Betätigungsspindel (26) zwischen zwei Endstellungen um mindestens 180° ermöglicht.

12. Umschaltvorrichtung nach einem der vorstehenden Ansprüche, **dadurch gekennzeichnet, dass** mindestens ein Näherungs- oder Endschalter (36a, 36b) zur Überwachung der Position der Betätigungsspindel (26) an einem vorstehenden Teil des weiteren Spindelteiles (30) mit der Betätigungseinrichtung (28) vorgesehen ist.

## Claims

1. Switching device having at least two valve bodies (12a, 12b, 12, 12') as apparatus to be actuated, which can in each case be movably guided by means of a pivot drive (26) arranged along an axis of rotation (R), said drive being able to be controlled by an actuating apparatus (28), for the purpose of blocking and releasing fluid paths in at least one housing part (10, 10a, 10b), wherein at least the valve bodies (12a, 12b, 12, 12') with their respective housing part (10, 10a, 10b) are arranged behind one another as apparatus to be actuated on one side of the device (28), wherein the actuating apparatus (28) is arranged on the other side of the device, wherein one side is connected to the respective other side along the axis of rotation (R) of the pivot drive (26),
wherein, in one valve body (12) designed as a valve ball, a hole (18) to release associated fluid paths and two slot receptacles (46a, 46b) to control the valve body (12) are formed, and
wherein the hole (18) is made in a radial direction in the valve body (12),
**characterised in that**
the slot receptacles (46a, 46b) lie crosswise on top of one another;
and
**in that** the hole (18a or 18b respectively) continues via one of the slot receptacles (46a, 46b), which acts as a fluid guide released by a control web, to connect two fluid ports to one another via the associated fluid space (42, 42a, 42b), which is designed as an annular space.

2. Switching device according to claim 1, **characterised in that** the pivot drive comprises a multi-part actuating spindle (26), **in that** in each case one spindle part (20, 20a, 20b) is located between two valve bodies (12a, 12b, 12, 12') and acts upon said bodies for the purpose of the common rotational movement thereof, and **in that** a further spindle part (30) along the axis of rotation (R) acts upon a valve body (12b) lying in an outermost position on one side, which protrudes into the other side and serves to act upon the actuating apparatus (28).

3. Switching device according to either claim 1 or claim 2, **characterised in that** the respective valve body (12a, 12b, 12, 12') is designed as a kind of valve ball, which comprises at least one slot receptacle (46a, 46b, 46c) for engaging one control web (22a, 22b, 22c) of the respectively assignable spindle part (20, 20a, 20b, 30) of the actuating spindle (26).

4. Switching device according to any of the preceding claims, **characterised in that** at least one of the valve balls (12a, 12b, 12, 12'), preferably the valve ball that is located at the outermost position on one side and can be actuated by the further spindle part (30), comprises a further slot receptacle (46a) which acts as a fluid guide, released by the control web of one spindle part (20, 20a, 20b).

5. Switching device according to any of the preceding claims, **characterised in that** the two slot receptacles (46a, 46b, 46c) of each valve ball (12a, 12b, 12, 12') are perpendicular to one another, and are aligned with the slot receptacles (46a, 46b, 46c) that serve to engage the respectively assigned control web (22a, 22b, 22c) of the spindle parts (20, 20a, 20b, 30).

6. Switching device according to any of the preceding claims, **characterised in that** the respective valve ball (12a, 12b, 12, 12') is guided in a valve holder in the associated housing part (10, 10a, 10b) such that a fluid space (42, 42a, 42b) is formed between the valve holder and the valve ball (12a, 12b, 12, 12'), into which at least two of three fluid ports (14a, 14b, 16a, 16b, 38a, 38b) in the respective housing part (10, 10a, 10b) emerge, of which, in turn, two fluid ports (14a, 14b, 16a, 16b) have a common axis (A, A') and the third fluid port (38a, 38b), along with its axis (B, B'), is perpendicular to this common axis (A, A').

7. Switching device according to any of the preceding claims, **characterised in that** the valve balls (12a, 12b, 12, 12'), which can be actuated in pairs by one spindle part (20, 20a, 20b), at the same time and together each block one fluid port (14a, 14b, 16a, 16b) lying in the same direction or, in each case, one fluid port (14a, 14b, 16a, 16b) lying in this direction and one fluid port lying opposite thereto.

8. Switching device according to any of the preceding claims, **characterised in that** the third fluid port (38a, 38b) is perpendicular to the axis of rotation (R) of the actuating spindle (26) with its spindle parts (20, 20a, 20b, 30).

9. Switching device according to any of the preceding claims, **characterised in that** one housing part (32a, 32b) comprises the spindle parts (20, 20a, 20b, 30) of the actuating spindle (26) into which further housing parts (10, 10a, 10b) are screwed in pairs on opposite sides, said housing parts comprising the fluid ports (14a, 14b, 16a, 16b) lying in the common axis (A, A') and receiving the respectively assignable valve balls (12a, 12b, 12, 12') guided between them in bearing shells.

10. Switching device according to any of the preceding claims, **characterised in that** one housing part (10, 10a, 10b) receives at least one spindle part (20, 20a, 20b, 30) acting upon both valve bodies (12a, 12b, 12, 12'), and **in that** the at least one spindle part (20, 20a, 20b, 30) is mounted in this housing part (10, 10a, 10b) by means of a safety device such that it cannot be displaced axially.

11. Switching device according to any of the preceding claims, **characterised in that** the actuating apparatus (28), which can be actuated by hand by means of a lever or is motor-driven, allows all spindle parts (20, 20a, 20b, 30) of the actuating spindle (26) to be pivoted through at least 180° between two end positions.

12. Switching device according to any of the preceding claims, **characterised in that** at least one proximity switch or limit switch (36a, 36b) is provided to monitor the position of the actuating spindle (26) on a protruding part of the further spindle part (30) with the actuating apparatus (28).

## Revendications

1. Installation de commutation comprenant au moins deux corps (12a, 12b, 12, 12') de soupape comme dispositif à actionner, qui, respectivement au moyen d'un entraînement (26) de pivotement monté le long d'un axe (R) de rotation et pouvant être commandé par un dispositif (28) d'actionnement, sont guidés avec possibilité de se déplacer dans au moins une partie (10, 10a, 10b) d'une enveloppe, en vue d'obstruer et de dégager des chemins de fluide, dans laquelle au moins les corps (12a, 12b, 12, 12') de soupape sont, avec leur partie (10, 10a, 10b) d'enveloppe respective, disposés suivant un agencement l'un derrière l'autre, comme dispositif à actionner, d'un côté de l'installation, dans laquelle le dispositif (28) d'actionnement est disposé de l'autre côté de l'installation, dans laquelle le un côté suit l'autre côté respectif le long de l'axe (R) de rotation de l'entraînement (26) à pivotement,
dans laquelle, dans le un corps (12) de soupape, constitué sous la forme d'une bille de soupape, sont constitués un trou (18) de dégagement de chemins de fluide associés et de logements (46a, 46b) en fente de commande du corps (12) de soupape, et
dans laquelle le trou (18) est ménagé dans la direction radiale du corps (12) de soupape,
**caractérisée**
**en ce que** les logements (46a, 46b) sont, l'un par rapport à l'autre, en croix, et
**en ce que** le trou (18a et 18b) se prolonge par l'un des logements (46a, 46b) en fente, qui, laissé libre par une barrette de commande, sert de guidage de fluide, pour relier entre eux deux raccords de fluide par l'espace (42, 42a, 42b) pour du fluide associé, qui est réalisé en espace annulaire.

2. Installation de commutation suivant la revendication 1, **caractérisée en ce que** l'entraînement à pivotement a une broche (26) d'actionnement en plusieurs parties, **en ce que** respectivement une partie (20, 20a, 20b) de la broche, entre deux corps (12a, 12b, 12, 12') de soupape, attaque celles-ci pour le mouvement de rotation commun, et **en ce qu'**une autre partie (30) de la broche attaque, le long de l'axe (R) de rotation, un corps (12b) de soupape se trouvant le plus à l'extérieur du un côté, qui fait saillie de l'autre côté et qui sert à l'attaque du dispositif (28) d'actionnement.

3. Installation de commutation suivant la revendication 1 ou 2, **caractérisée en ce que** le corps (12a, 12b, 12, 12') de soupape respectif est constitué à la manière d'une bille de soupape, qui a au moins un logement (46a, 46b, 46c) en fente, pour la pénétration d'une barrette (22a, 22b, 22c) de commande de la partie (20, 20a, 20b, 30) de broche, pouvant être associée respectivement, de la broche (26) d'actionnement.

4. Installation de commutation suivant l'une des revendications précédentes, **caractérisée en ce qu'**au moins l'une des billes (12a, 12b, 12, 12') de soupape, de préférence la bille de soupape, qui est disposée du un côté se trouvant le plus à l'extérieur et qui peut être actionnée par l'autre partie (30) de la broche, a un autre logement (46a) en fente, qui, laissé libre de la barrette de commande de la une partie (20, 20a, 20b) de la broche, sert de conduite de fluide.

5. Installation de commutation suivant l'une des revendications précédentes, **caractérisée en ce que** les deux logements (46a, 46b, 46c) en fente de respectivement une bille (12a, 12b, 12, 12') de soupape sont perpendiculaires entre eux, et **en ce que** les logements (46a, 46b, 46c) en fente, qui servent à la pénétration de la barrette (22a, 22b, 22c) de commande, associée respectivement, des parties (20, 20a, 20b, 30) de la broche, sont dirigés dans la même direction.

6. Installation de commutation suivant l'une des revendications précédentes, **caractérisée en ce que** la bille (12a, 12b, 12, 12') de soupape respective est guidée dans un logement de soupape dans la partie (10, 10a, 10b) de l'enveloppe associée, **en ce que**, entre un logement de soupape et une bille (12a, 12b, 12, 12') de soupape, est formé un espace (42, 42a, 42b) pour du fluide, dans lequel débouchent au moins deux de trois raccords (14a, 14b, 16a, 16b, 38a, 38b) pour du fluide de la partie (10, 10a, 10b) respective d'enveloppe, dont à nouveau deux raccords (14a, 14b, 16a, 16b) pour du fluide ont un axe (A, A') commun et le troisième raccord (38a, 38b) pour du fluide est, par son axe (B, B'), perpendiculaire à cet axe (A, A') commun.

7. Installation de commutation suivant l'une des revendications précédentes, **caractérisée en ce que** les billes (12a, 12b, 12, 12') de soupape, qui peuvent être actionnées par paire par la une partie (20, 20a, 20b) de broche, obturent en même temps et conjointement respectivement un raccord (14a, 14b, 16a, 16b) pour du fluide se trouvant dans le même sens, ou respectivement un raccord dirigé dans ce sens et un raccord (14a, 14b, 16a, 16b) pour du fluide dirigé dans le sens contraire.

8. Installation de commutation suivant l'une des revendications précédentes, **caractérisée en ce que** le troisième raccord (38a, 38b) pour du fluide est perpendiculaire à l'axe (R) de rotation de la broche (26) d'actionnement par ses parties (20, 20a, 20b, 30) de broche.

9. Installation de commutation suivant l'une des revendications précédentes, **caractérisée en ce qu'**une partie (32a, 32b) de l'enveloppe a les parties (20, 20a, 20b, 30) de broche de la broche (26) d'actionnement, partie de l'enveloppe dans laquelle, sur des côtés opposés, sont vissées par paire d'autres parties (10, 10a, 10b) de l'enveloppe, qui ont les deux raccords (14a, 14b, 16a, 16b) pour du fluide se trouvant sur l'axe (A, A') commun et qui reçoivent entre elles, guidées dans des coussinets, les billes (12a, 12b, 12, 12') de soupape pouvant être associées respectivement.

10. Installation de commutation suivant l'une des revendications précédentes, **caractérisée en ce que** la une partie (10, 10a, 10b) de l'enveloppe reçoit au moins une partie (20, 20a, 20b, 30) de la broche attaquant les deux corps (12a, 12b, 12, 12') de soupape, et **en ce que** la au moins une partie (20, 20a, 20b, 30) de la broche est montée, au moyen d'un arrêt, sans possibilité de coulisser axialement, dans cette partie (10, 10a, 10b) de l'enveloppe.

11. Installation de commutation suivant l'une des revendications précédentes, **caractérisée en ce que** le dispositif (28) d'actionnement, pouvant être actionné au moyen d'un levier à la main ou d'une manière motorisée, rend possible un pivotement de toutes les parties (20, 20a, 20b, 30) de la broche (26) d'actionnement d'au moins 180° entre deux positions de fin de course.

12. Installation de commutation suivant l'une des revendications précédentes, **caractérisée en ce qu'**au moins un interrupteur (36a, 36b) de proximité ou de fin de course est prévu pour contrôler la position de la broche (26) d'actionnement sur une partie en saillie de l'autre partie (30) de la broche ayant le dispositif (28) d'actionnement.
